# EUROPEAN PATENT SPECIFICATION

(11) **EP 4 057 613 B1**
(45) Date of publication and mention of the grant of the patent: **04.10.2023**
(21) Application number: 21162239.4
(22) Date of filing: 12.03.2021
(51) Int. Cl.: H04N 23/51, H04N 23/55

(54) **A VEHICLE CAMERA DEVICE**
FAHRZEUGKAMERAVORRICHTUNG
DISPOSITIF DE CAMÉRA DE VÉHICULE

(43) Date of publication of application: 14.09.2022
(73) Proprietor: Arriver Software AB, 583 30 Linköping (SE)
(72) Inventor: ZAMFIR, Marius, 447 37 Vårgårda (SE); CACU, Adrian, 447 37 Vårgårda (SE)
(74) Representative: Loveless, Ian Mark

(56) References cited:
- WO-A1-2010/111465
- US-A1- 2016 018 619

## Description

### DESCRIPTION OF THE DISCLOSURE

The present disclosure relates to a camera device that comprises a camera housing and a lens assembly.

Many vehicle environment detection systems comprise one or more sensors such as for example radar sensor, LIDAR sensors, camera devices and ultrasonic sensors. These are used for collecting data used for safety arrangements as well as for driver assistance systems.

Regarding camera devices, a lens assembly is normally mounted to a camera housing using retainer ring to retain the lens assembly in the camera housing. The retainer ring can, however, be sensitive to different environments and may require a mounting force that may loosen and/or damage the lens assembly and the retainer ring itself. US2016186619 A1 discloses a lens assembly with an inner barrel, a spacer around the inner barrel, an outer barrel and a housing. The inner barrel has two circumferentially running slots, and it is mounted inside the spacer by placing an o-ring and a wedge in a respective circumferentially running slot. WO2010111465 A1 discloses that a lens barrel is connected by an adhesive to an outer rim of a housing.

It is therefore desired to provide a new method and means for mounting a lens assembly to a camera housing while eliminating the issues above, such that a more stable and secure assembly process is provided. It is also desired to enable the use of standard parts that leads to cost reduction.

The invention is set in claims 1-15.

Said object is achieved by means of a camera device that comprises a camera housing and a lens assembly. The camera housing comprises a through-hole connecting an inner side of the camera housing to an outer side of the camera housing, a first rim portion at least partially circumventing a first end of the through-hole at the inner side of the camera housing, and a second rim portion, at least partially circumventing a second end of the through-hole at the outer side of the camera housing. The lens assembly comprises a lens aperture, a lens flange, a lens barrel, and a circumferentially running slot provided in the lens barrel between the lens aperture and the lens flange.

The lens assembly further comprises an at least partly circumferentially running resilient member that at last partly circumvents the lens barrel and is adapted to be sandwiched between the first rim portion and the lens flange, and a resilient partly circumferentially running clip member that is adapted to be received in the slot and to abut the second rim portion.

This allows an easily performed and reliable mounting of the lens assembly into the camera housing, the resilient member and the clip member together holding the lens assembly in place in the camera housing. A more stable and secure assembly process is thus provided.

According to some aspects, the through-hole is adapted to receive the lens barrel by insertion of at least a part of the lens barrel into the through-hole via the first rim portion towards the second rim portion along a first longitudinal axis such that the lens aperture clears the second rim portion and is exposed on the outer side of the camera housing.

This means that during mounting, the lens barrel is inserted into the through-hole until the resilient member contacts the first rim portion and the lens aperture clears the second rim portion. In this way, an easy and reliable mounting is enabled.

According to some aspects, the resilient member is a circumferentially running member that is compressible in a direction parallel to the first longitudinal axis such that the resilient member strives to separate the first rim portion and the lens flange.

This means that when mounted, the clip member is pressed towards the second rim portion and the resilient member is pressed towards the first rim portion, and towards the lens flange. This way, the lens barrel is reliably and securely fixed in the camera housing.

According to some aspects, the resilient member is adapted to seal the through-hole.

This means that the inner side can be sealed from the outside by means of the resilient member.

According to some aspects, the resilient member comprises at least one of:
- an O-ring;
- a circular gasket;
- a wave washer;
- a wave spring wire;
- a multiwave washer;
- a disc washer;
- a curved washer; and
- a finger spring washer.

The resilient member can thus be made by many different items that can be combined. This means that standard components can be used which reduces costs.

According to some aspects, the resilient member comprises a metal washer and a sealing gasket.

This means that the inner side can be sealed from the outside by means of the resilient member.

According to some aspects, the clip member partly circumvents an expandable receiving aperture that, in an expanded state, allows the clip member to be thread over the lens barrel and, in a less expanded state, allows the clip member to be fitted into the slot.

According to some aspects, the clip member comprises a first end and a second end. The ends are separated by a gap that is increased when the receiving aperture is expanded.

This means that the clip member has a C-shape and can be expanded for an easy fit into the slot. The clip member can be a standard part, according to example a "DIN 7993 A" snap ring or similar. The use of standard parts leads to cost reduction.

According to some aspects, the lens barrel comprises a first portion that has a widening diameter from the lens aperture towards the slot. This facilitates the mounting of the clip member into the slot.

According to some aspects, the lens barrel comprises a second portion that has a constant diameter between the slot and the lens flange.

This means that the lens barrel has an uncomplicated geometry, composed of the cylindrical second portion and the slot, or groove, for clip member accommodation, and the partly conical first portion that allows easy insertion of the clip member until it snaps into slot.

According to some aspects, the through-hole is constituted by an at least partly cylindrical portion, having a cylindrical inner wall that is adapted to receive and support the lens barrel between the slot and the resilient member.

This way, the lens barrel is firmly retained and supported in the through-hole.

This object is also achieved by means of a method that is associated with the above advantages.

### BRIEF DESCRIPTION OF THE DRAWINGS

The present disclosure will now be described more in detail with reference to the appended drawings, where:
- Figure 1: shows a schematic cut-open part of a vehicle with a camera device;
- Figure 2: shows a schematic top perspective view of a camera device;
- Figure 3: shows a schematic perspective exploded view of a lens assembly;
- Figure 4: shows a schematic perspective front view of the lens assembly;
- Figure 5: shows a schematic side view of the lens assembly;
- Figure 6: shows a schematic cut-open side view of a camera housing and a lens assembly during mounting at a first instant;
- Figure 7: shows a schematic cut-open side view of the camera housing and the lens assembly during mounting at a second instant;
- Figure 8: shows a schematic cut-open side view of the camera housing and the lens assembly when mounted;
- Figure 9: shows a schematic cut-open perspective view of the camera housing and the lens assembly when mounted;
- Figure 10: shows a schematic section side view of the camera device; and
- Figure 11: shows a flowchart for methods according to the present disclosure.

### DETAILED DESCRIPTION

Aspects of the present disclosure will now be described more fully hereinafter with reference to the accompanying drawings. The different devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

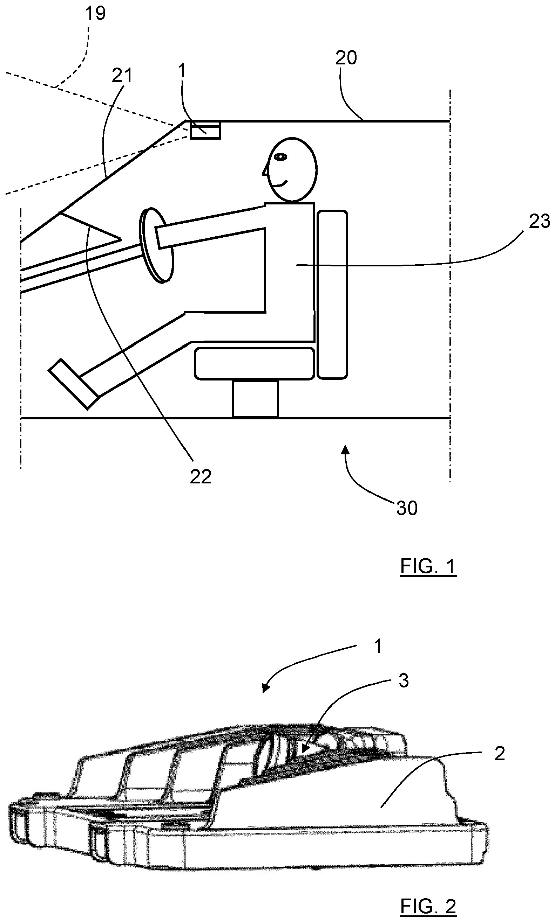

Figure 1 schematically shows a cut-open part of a vehicle 30, where the vehicle 30 comprises a digital camera device 1. The digital camera device 1 is arranged for capturing images of the surroundings outside the vehicle 30 by means of a certain field of view 19. A digital camera device 1 can also, or alternatively, be arranged for capturing images of a driver 23, where these images, which may include eye movements, for example can be used for detecting a degree of driver drowsiness.

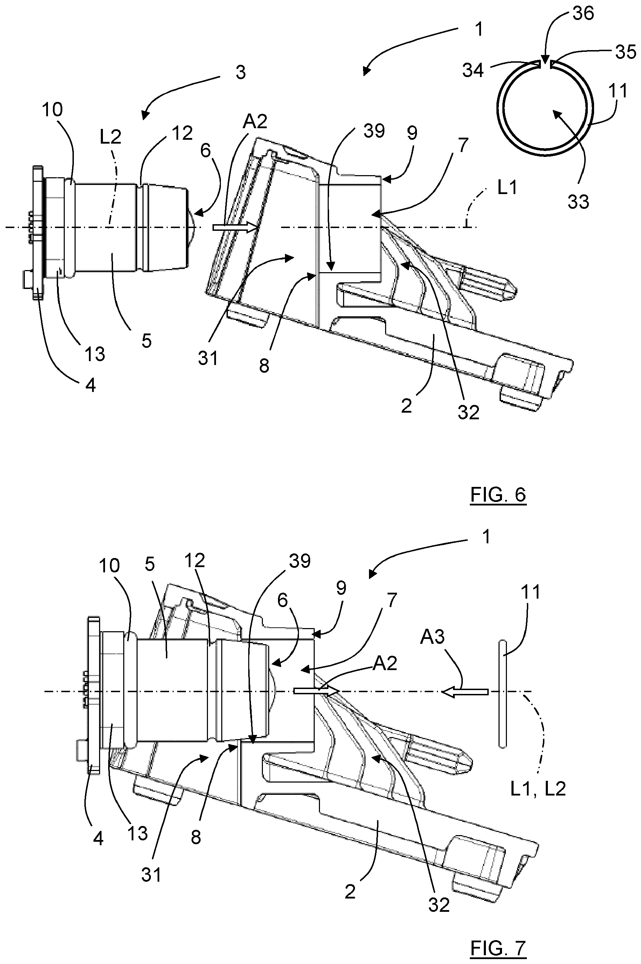

With reference also to Figure 2, showing a schematic perspective side view of the camera device 1, and Figure 6, showing a schematic cut-open side view of the camera device during mounting, the camera device 1 comprises a camera housing 2 and a lens assembly 3, where the camera housing 2 comprises a through-hole 7 connecting an inner side 31 of the camera housing 2 to an outer side 32 of the camera housing 2. The camera housing 2 further comprises a first rim portion 8 at least partially circumventing a first end of the through-hole 7 at the inner side 31 of the camera housing 2, and a second rim portion 9, at least partially circumventing a second end of the through-hole 7 at the outer side 32 of the camera housing 2.

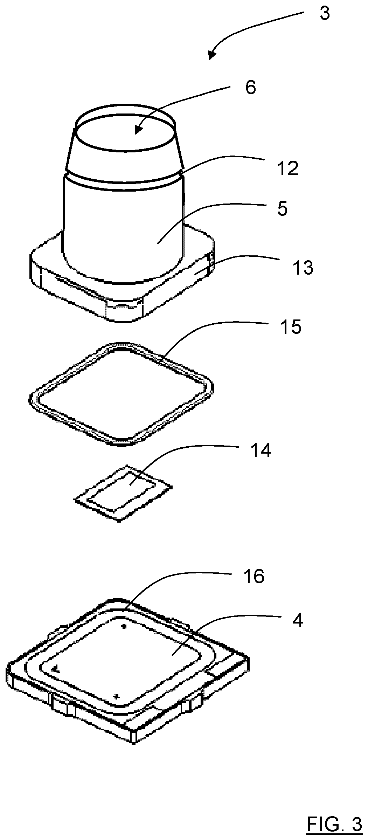

With reference also to Figure 3, showing an exploded perspective view of a part of the lens assembly 3, the lens assembly 3 comprises a lens aperture 6, a lens flange 13, a lens barrel 5, and a circumferentially running slot 12 provided in the lens barrel 5 between the lens aperture 6 and the lens flange 13.

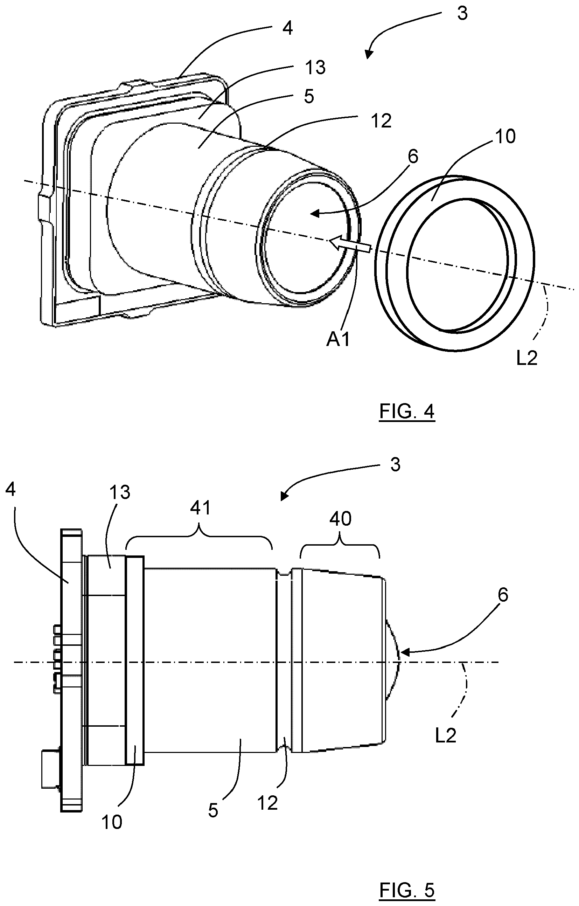

With reference also to Figure 4, and Figure 5, showing a side view of a part of the lens assembly 3, the lens assembly 3 comprises an at least partly circumferentially running resilient member 10 that at last partly circumvents the lens barrel 5 and is adapted to be sandwiched between the first rim portion 8 and the lens flange 13. In Figure 4 and Figure 5 it is illustrated how the resilient member 10 is thread over the lens barrel 5 and brought into contact with the lens flange 13, indicated with a first arrow A1 in Figure 4.

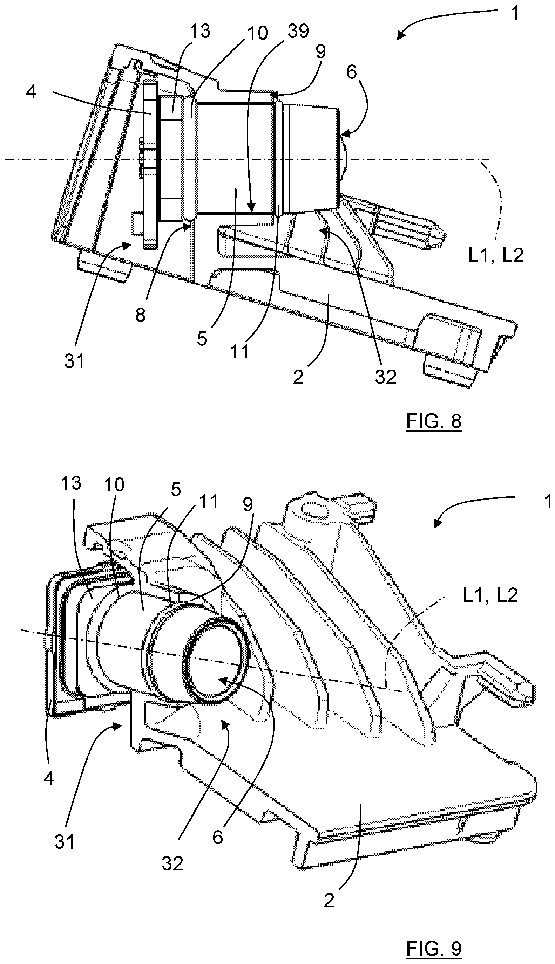

With reference also to Figure 7 and Figure 8 that show schematic cut-open side views of the camera device during mounting, and Figure 9 that shows a schematic cut-open perspective front views of the camera device, the lens assembly 3 comprises a resilient partly circumferentially running clip member 11 that is adapted to be received in the slot 12 and to abut the second rim portion 9.

This allows an easy and reliable mounting of the lens assembly 3 into the camera housing 2, the resilient member 10 and the clip member 11 together holding the lens assembly 3 in place in the camera housing 2.

According to some aspects, the through-hole 7 is adapted to receive the lens barrel 5 by insertion of at least a part of the lens barrel 5 into the through-hole 7 via the first rim portion 8 towards the second rim portion 9 along a first longitudinal axis L1 such that the lens aperture 6 clears the second rim portion 9 and is exposed on the outer side 32 of the camera housing 2.

This means that during mounting, the lens barrel 5 is inserted into the through-hole 7, as indicated by means of a second arrow A2, until the resilient member 10 contacts the first rim portion 8 and the lens aperture 6 clears the second rim portion 9, as illustrated in Figure 6 - Figure 8. According to some aspects, the lens barrel 5 is pushed until it will compress the resilient member 10, working as a tolerance compensator, to an indicated displacement value.

The clip member 11 can then be thread over the lens aperture 6 and pushed towards the slot 12, as indicated with a third arrow A3, where the clip member 11 is received and locked, snapping into the slot 12, as illustrated in Figure 7 - Figure 9, where Figure 9 shoes a cut-open front perspective view if the camera device. The lens barrel 5 extends along a second longitudinal axis L2 that coincides with the first longitudinal axis L1 during and after mounting.

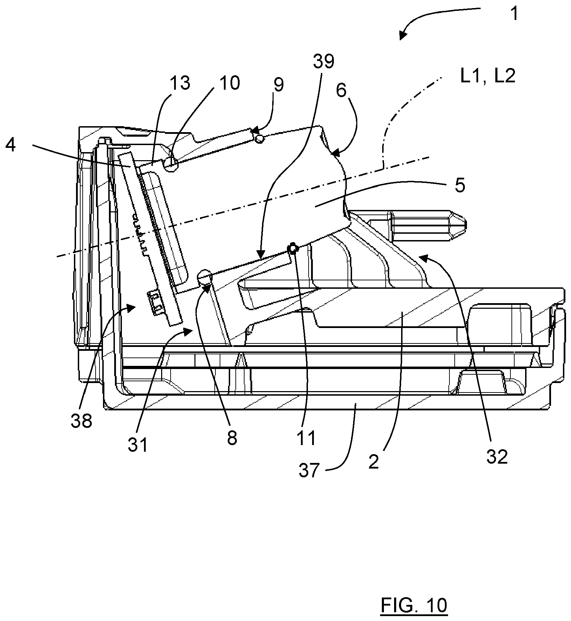

The camera housing 2 is mentioned to have an inner side 31 and an outer side 32, where the inner side 31 is adapted to be at least partly sealed by means of a closing bracket 37 as illustrated in the section side view of the camera device in Figure 10. In this way, an inner space 38 is formed, where the inner space 38 according to some aspects can be sealed from the outside by means of the resilient member 10 as will be discussed more in detail below. This means that in Figure 6-9 the camera device 1 is shown without the closing bracket 37, and in Figure 10 the camera device 1 is shown with the closing bracket 37.

According to some aspects, the resilient member 10 is a circumferentially running member that is compressible in a direction parallel to the first longitudinal axis L1 such that the resilient member 10 strives to separate the first rim portion 8 and the lens flange 13.

This means that when mounted, the clip member 11 is pressed towards the second rim portion 9 and the resilient member 10 is pressed towards the first rim portion 8, and towards he lens flange 13, ensuring that the lens barrel 5 is reliably and securely fixed in the camera housing 2.

The resilient member 10 can be formed in many ways in order to accomplish the above compressible functionality. According to some aspects, the resilient member 10 comprises at least one of:
- an O-ring;
- a circular gasket;
- a wave washer;
- a wave spring wire;
- a multiwave washer;
- a disc washer;
- a curved washer; and
- a finger spring washer.

According to some aspects, the resilient member 10 is adapted to seal the through-hole 7. In this case, and in case the resilient member 10 comprises a metal washer, the resilient member 10 also comprises a sealing gasket. In this case the resilient member 10 is a combination of two different items, and combinations of three and more different items are of course conceivable.

According to some aspects, the clip member 11 partly circumvents an expandable receiving aperture 33 that, in an expanded state, allows the clip member 11 to be thread over the lens barrel 5 and, in a less expanded state, allows the clip member 11 to be fitted into the slot 12.

According to some further aspects, the clip member 11 comprises a first end 34 and a second end 35, where the ends 34, 35 are separated by a gap 36, where the gap 36 is increased when the receiving aperture 33 is expanded.

This means that the clip member 11 has a C-shape and can be expanded for an easy fit into the slot 12. The clip member 11 can be a standard part, according to example a "DIN 7993 A" snap ring or similar. The use of standard parts leads to cost reduction.

According to some aspects, as shown in Figure 5, the lens barrel 5 comprises a first portion 40 that has a widening diameter from the lens aperture 6 towards the slot 12. This facilitates the mounting of the clip member 11 into the slot 12.

According to some aspects, the lens barrel 5 comprises a second portion 41 that has a constant diameter between the slot 12 and the lens flange 13. According to some further aspects, as shown in Figure 6-8 and Figure 10, the through-hole 7 is constituted by an at least partly cylindrical portion, having a cylindrical inner wall 39 that is adapted to receive and support the lens barrel 5 between the slot 12 and the resilient member 10. This means that the lens barrel 5 has a simplified geometry, composed of the cylindrical second portion 41 and a slot 12, or groove, for clip member 11 accommodation, and the partly conical first portion 40 that allows easy insertion of the clip member 11 until it snaps into slot 12.

According to some aspects, the lens assembly 3 comprises a printed circuit board 4 (PCB) with an image sensor 14.

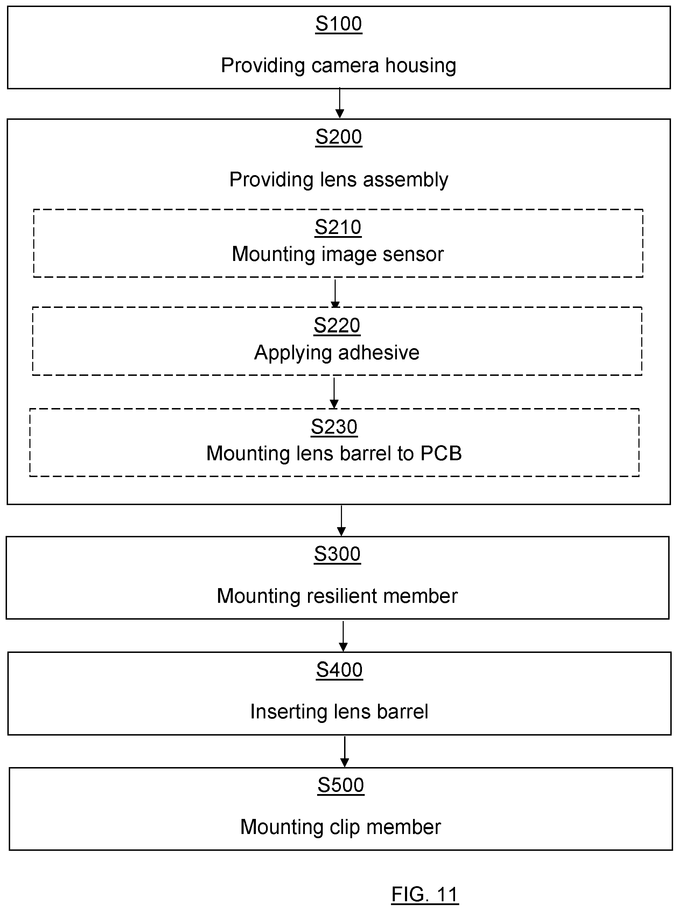

With reference to Figure 11, the present disclosure also relates to ta method for manufacturing a camera device 1, the method comprising providing S100 a camera housing 2 and providing S200 a lens assembly 3 with a printed circuit board 4, PCB, and a lens barrel 5 having a lens aperture 6. The method further comprises mounting S300 an at least partly circumferentially running resilient member 10 to the lens barrel 5 such that it at last partly circumvents the lens barrel 5, and inserting S400 the lens barrel 5 into a mounting aperture 7 in the camera housing 2.

The lens barrel is inserted via a first rim portion 8 at least partially circumventing a first end of the through-hole 7 at an inner side 31 of the camera housing 2, towards a second rim portion 9 at least partially circumventing a second end of the through-hole 7 at an outer side 32 of the camera housing 2, along a first longitudinal axis L1, such that the lens aperture 6 clears the second rim portion 9 and is exposed on the outer side 32 of the camera housing 2, such that the resilient member 10 is sandwiched between the first rim portion 8 and the lens flange 13.

The method further comprises mounting S500 a resilient partly circumferentially running clip member 11 to a first circumferentially running slot 12 provided in the lens barrel 5 between the lens aperture 6 and the lens flange 13, such that the clip member 11 abuts the second rim portion 9.

According to some aspects, the resilient member 10 is a circumferentially running member that is compressible in a direction parallel to the first longitudinal axis L1, and strives to separate the first rim portion 8 and the lens flange 13.

According to some aspects, providing S200 a lens assembly 3 comprises mounting S210 an image sensor 14 to the PCB 4, applying S220 an adhesive 15 in a receiving slot 16 in the PCB 4, and mounting S230 the lens barrel 5 to the PCB 4 such that the adhesive 15 bonds the lens barrel 5 to the PCB 4.

The present disclosure is not limited to the examples above, but may vary freely within the scope of the appended claims. For example, it is evident that there can be many different types of resilient members and clip members that work in different ways that can be used for the present disclosure.

With reference to Figure 1, the digital camera device 1 may be of any suitable kind, and may be placed in any suitable position in the vehicle 30, for example at the ceiling 20, windshield 21 or the dashboard 22. Other examples are airbag covers.

According to some aspects, the digital camera device 1 comprises a power assembly, an interface assembly and a control unit, which all are positioned at and/or within the camera housing.

According to some aspects, the camera housing 2 is made in a plastic or/and in a metal material.

## Claims

1. A camera device (1) that comprises a camera housing (2) and a lens assembly (3), where the camera housing (2) comprises:
- a through-hole (7) connecting an inner side (31) of the camera housing (2) to an outer side (32) of the camera housing (2),
- a first rim portion (8) at least partially circumventing a first end of the through-hole (7) at the inner side (31) of the camera housing (2), and
- a second rim portion (9), at least partially circumventing a second end of the through-hole (7) at the outer side (32) of the camera housing (2),
and where the lens assembly (3) comprises:
- a lens aperture (6),
- a lens flange (13),
- a lens barrel (5), and
- a circumferentially running slot (12) provided in the lens barrel (5) between the lens aperture (6) and the lens flange (13),
wherein the lens assembly (3) comprises:
- an at least partly circumferentially running resilient member (10) that at last partly circumvents the lens barrel (5) and is adapted to be sandwiched between the first rim portion (8) and the lens flange (13), and
- a resilient partly circumferentially running clip member (11) that is adapted to be received in the slot (12) and to abut the second rim portion (9).

2. The camera device (1) according to claim 1, wherein the through-hole (7) is adapted to receive the lens barrel (5) by insertion of at least a part of the lens barrel (5) into the through-hole (7) via the first rim portion (8) towards the second rim portion (9) along a first longitudinal axis (L1) such that the lens aperture (6) clears the second rim portion (9) and is exposed on the outer side (32) of the camera housing (2).

3. The camera device (1) according to any one of the claims 1 or 2, wherein the resilient member (10) is a circumferentially running member that is compressible in a direction parallel to the first longitudinal axis (L1) such that the resilient member (10) strives to separate the first rim portion (8) and the lens flange (13).

4. The camera device (1) according to any one of the previous claims, wherein the resilient member (10) is adapted to seal the through-hole (7).

5. The camera device (1) according to any one of the previous claims, wherein the resilient member (10) comprises at least one of:
- an O-ring;
- a circular gasket;
- a wave washer;
- a wave spring wire;
- a multiwave washer;
- a disc washer;
- a curved washer; and
- a finger spring washer.

6. The camera device (1) according to any one of the previous claims, wherein the resilient member (10) comprises a metal washer and a sealing gasket.

7. The camera device (1) according to any one of the previous claims, wherein the clip member (11) partly circumvents an expandable receiving aperture (33) that, in an expanded state, allows the clip member (11) to be thread over the lens barrel (5) and, in a less expanded state, allows the clip member (11) to be fitted into the slot (12).

8. The camera device (1) according to claim 7, wherein the clip member (11) comprises a first end (34) and a second end (35), where the ends (34, 35) are separated by a gap (36), where the gap (36) is increased when the receiving aperture (33) is expanded.

9. The camera device (1) according to any one of the previous claims, wherein the lens barrel (5) comprises a first portion (40) that has a widening diameter from the lens aperture (6) towards the slot (12).

10. The camera device (1) according to any one of the previous claims, wherein the lens barrel (5) comprises a second portion (41) that has a constant diameter between the slot (12) and the lens flange (13).

11. The camera device (1) according to any one of the previous claims, wherein the through-hole (7) is constituted by an at least partly cylindrical portion, having a cylindrical inner wall (39) that is adapted to receive and support the lens barrel (5) between the slot (12) and the resilient member (10).

12. The camera device (1) according to any one of the previous claims, wherein the lens assembly (3) comprises a printed circuit board (4), PCB, with an image sensor (14).

13. A method for manufacturing a camera device (1), the method comprising
providing (S100) a camera housing (2) wherein the camera housing (2) comprises:
a through-hole (7) connecting an inner side (31) of the camera housing (2) to an outer side (32) of the camera housing (2);
providing (S200) a lens assembly (3) with a printed circuit board (4), PCB, and a lens barrel (5) having a lens aperture (6) and a lens flange;
mounting (S300) an at least partly circumferentially running resilient member (10) to the lens barrel (5) such that it at last partly circumvents the lens barrel (5);
inserting (S400) the lens barrel (5) into a mounting aperture (7) in the camera housing (2), via a first rim portion (8) at least partially circumventing a first end of the through-hole (7) at an inner side (31) of the camera housing (2), towards a second rim portion (9) at least partially circumventing a second end of the through-hole (7) at an outer side (32) of the camera housing (2), along a first longitudinal axis (L1), such that the lens aperture (6) clears the second rim portion (9) and is exposed on the outer side (32) of the camera housing (2), such that a resilient member (10) is sandwiched between the first rim portion (8) and the lens flange (13); and
mounting (S500) a resilient partly circumferentially running clip member (11) to a first circumferentially running slot (12) provided in the lens barrel (5) between the lens aperture (6) and the lens flange (13), such that the clip member (11) abuts the second rim portion (9).

14. The method according to claim 13, wherein the resilient member (10) is a circumferentially running member that is compressible in a direction parallel to the first longitudinal axis (L1), and strives to separate the first rim portion (8) and the lens flange (13).

15. The method according to any one of the claims 13 or 14, wherein providing (S200) a lens assembly (3) comprises:
mounting (S210) an image sensor (14) to the PCB (4)
applying (S220) an adhesive (15) in a receiving slot (16) in the PCB (4); and
mounting (S230) the lens barrel (5) to the PCB (4) such that the adhesive (15) bonds the lens barrel (5) to the PCB (4).

## Patentansprüche

1. Kameragerät (1), das ein Kameragehäuse (2) und eine Objektivbaugruppe (3) umfasst, wobei das Kameragehäuse (2) Folgendes umfasst:
- ein Durchgangsloch (7), das eine Innenseite (31) des Kameragehäuses (2) mit einer Außenseite (32) des Kameragehäuses (2) verbindet,
- einen ersten Randabschnitt (8), der ein erstes Ende des Durchgangslochs (7) an der Innenseite (31) des Kameragehäuses (2) zumindest teilweise umgibt, und
- einen zweiten Randabschnitt (9), der ein zweites Ende des Durchgangslochs (7) an der Außenseite (32) des Kameragehäuses (2) zumindest teilweise umgibt,
und wobei die Objektivbaugruppe (3) Folgendes umfasst:
- eine Objektivblende (6),
- einen Objektivflansch (13),
- einen Objektivtubus (5), und
- einen in Umfangsrichtung verlaufenden Schlitz (12), der im Objektivtubus (5) zwischen der Objektivblende (6) und dem Objektivflansch (13) vorgesehen ist,
wobei die Objektivbaugruppe (3) Folgendes umfasst:
- ein zumindest teilweise in Umfangsrichtung verlaufendes elastisches Element (10), das den Objektivtubus (5) zumindest teilweise umgibt und zum Einschließen zwischen dem ersten Randabschnitt (8) und dem Objektivflansch (13) ausgelegt ist, und
- ein elastisches, teilweise in Umfangsrichtung verlaufendes Clipelement (11), das zum Aufnehmen in dem Schlitz (12) und zum Anliegen am zweiten Randabschnitt (9) ausgelegt ist.

2. Kameragerät (1) nach Anspruch 1, wobei das Durchgangsloch (7) zum Aufnehmen des Objektivtubus (5) durch Einführen zumindest eines Teils des Objektivtubus (5) in das Durchgangsloch (7) über den ersten Randabschnitt (8) in Richtung des zweiten Randabschnitts (9) entlang einer ersten Längsachse (L1) ausgelegt ist, so dass die Objektivblende (6) den zweiten Randabschnitt (9) freigibt und an der Außenseite (32) des Kameragehäuses (2) exponiert wird.

3. Kameragerät (1) nach Anspruch 1 oder 2, wobei das elastische Element (10) ein in Umfangsrichtung verlaufendes Element ist, das in einer Richtung parallel zur ersten Längsachse (L1) zusammendrückbar ist, so dass das elastische Element (10) bestrebt ist, den ersten Randabschnitt (8) und den Objektivflansch (13) zu trennen.

4. Kameragerät (1) nach einem der vorherigen Ansprüche, wobei das elastische Element (10) zum Abdichten des Durchgangslochs (7) ausgelegt ist.

5. Kameragerät (1) nach einem der vorherigen Ansprüche, wobei das elastische Element (10) mindestens eines umfasst von:
- einem O-Ring;
- einer Ringdichtung;
- einer Wellenscheibe;
- einem Wellenfederdraht;
- einer mehrwelligen Scheibe;
- einer Unterlegscheibe;
- einer gekrümmten Scheibe; und
- einer Fingerfederscheibe.

6. Kameragerät (1) nach einem der vorherigen Ansprüche, wobei das elastische Element (10) eine Metallscheibe und eine Dichtung umfasst.

7. Kameragerät (1) nach einem der vorherigen Ansprüche, wobei das Clipelement (11) eine ausdehnbare Aufnahmeöffnung (33) teilweise umgibt, die es in einem ausgedehnten Zustand zulässt, das Clipelement (11) über den Objektivtubus (5) zu fädeln, und es in einem weniger ausgedehnten Zustand zulässt, das Clipelement (11) in den Schlitz (12) einzupassen.

8. Kameragerät (1) nach Anspruch 7, wobei das Clipelement (11) ein erstes Ende (34) und ein zweites Ende (35) aufweist, wobei die Enden (34, 35) durch einen Spalt (36) getrennt sind, wobei der Spalt (36) vergrößert wird, wenn die Aufnahmeöffnung (33) erweitert wird.

9. Kameragerät (1) nach einem der vorherigen Ansprüche, wobei der Objektivtubus (5) einen ersten Abschnitt (40) aufweist, der einen sich von der Objektivblende (6) zum Schlitz (12) hin erweiternden Durchmesser hat.

10. Kameragerät (1) nach einem der vorherigen Ansprüche, wobei der Objektivtubus (5) einen zweiten Abschnitt (41) aufweist, der einen konstanten Durchmesser zwischen dem Schlitz (12) und dem Objektivflansch (13) aufweist.

11. Kameragerät (1) nach einem der vorherigen Ansprüche, wobei das Durchgangsloch (7) durch einen zumindest teilweise zylindrischen Abschnitt mit einer zylindrischen Innenwand (39) gebildet wird, die zum Aufnehmen und Halten des Objektivtubus (5) zwischen dem Schlitz (12) und dem elastischen Element (10) ausgelegt ist.

12. Kameragerät (1) nach einem der vorherigen Ansprüche, wobei die Objektivbaugruppe (3) eine gedruckte Schaltung (4), PCB, mit einem Bildsensor (14) umfasst.

13. Verfahren zur Herstellung eines Kamerageräts (1), wobei das Verfahren Folgendes beinhaltet:
Bereitstellen (S100) eines Kameragehäuses (2), wobei das Kameragehäuse (2) Folgendes umfasst:
ein Durchgangsloch (7), das eine Innenseite (31) des Kameragehäuses (2) mit einer Außenseite (32) des Kameragehäuses (2) verbindet;
Bereitstellen (S200) einer Objektivbaugruppe (3) mit einer Leiterplatte (4), PCB, und einem Objektivtubus (5) mit einer Objektivblende (6) und einem Objektivflansch;
Montieren (S300) eines zumindest teilweise in Umfangsrichtung verlaufenden elastischen Elements (10) an dem Objektivtubus (5), so dass es den Objektivtubus (5) zumindest teilweise umgibt;
Einführen (S400) des Objektivtubus (5) in eine Montageöffnung (7) in dem Kameragehäuse (2) über einen ersten Randabschnitt (8), der ein erstes Ende des Durchgangslochs (7) an einer Innenseite (31) des Kameragehäuses (2) zumindest teilweise umgibt, zu einem zweiten Randabschnitt (9), der ein zweites Ende des Durchgangslochs (7) an einer Außenseite (32) des Kameragehäuses (2) zumindest teilweise umgibt, entlang einer ersten Längsachse (L1), so dass die Objektivblende (6) den zweiten Randabschnitt (9) freigibt und an der Außenseite (32) des Kameragehäuses (2) exponiert wird, so dass ein elastisches Element (10) zwischen dem ersten Randabschnitt (8) und dem Objektivflansch (13) eingeschlossen ist; und
Montieren (S500) eines elastischen, teilweise in Umfangsrichtung verlaufenden Clipelements (11) an einem ersten in Umfangsrichtung verlaufenden Schlitz (12), der in dem Objektivtubus (5) zwischen der Objektivblende (6) und dem Objektivflansch (13) vorgesehen ist, so dass das Clipelement (11) am zweiten Randabschnitt (9) anliegt.

14. Verfahren nach Anspruch 13, wobei das elastische Element (10) ein in Umfangsrichtung verlaufendes Element ist, das in einer Richtung parallel zur ersten Längsachse (LI) komprimierbar und bestrebt ist, den ersten Randabschnitt (8) und den Objektivflansch (13) zu trennen.

15. Verfahren nach Anspruch 13 oder 14, wobei das Bereitstellen (S200) einer Objektivbaugruppe (3) Folgendes beinhaltet:
Montieren (S210) eines Bildsensors (14) an der PCB (4),
Applizieren (S220) eines Klebstoffs (15) in einem Aufnahmeschlitz (16) in der PCB (4); und
Montieren (S230) des Objektivtubus (5) an der PCB (4), so dass der Klebstoff (15) den Objektivtubus (5) mit der PCB (4) verbindet.

## Revendications

1. Dispositif de caméra (1) comprenant un boîtier de caméra (2) et un ensemble d'objectif (3), dans lequel le boîtier de caméra (2) comprend :
- un trou d'interconnexion (7) connectant un côté intérieur (31) du boîtier de caméra (2) à un côté extérieur (32) du boîtier de la caméra (2),
- une première partie de bord (8) entourant au moins partiellement une première extrémité du trou d'interconnexion (7) au niveau du côté intérieur (31) du boîtier de caméra (2), et
- une seconde partie de bord (9) entourant au moins partiellement une seconde extrémité du trou d'interconnexion (7) au niveau du côté extérieur (32) du boîtier de caméra (2),
et dans lequel l'ensemble d'objectif (3) comprend :
- une ouverture d'objectif (6),
- une bride d'objectif (13),
- un barillet d'objectif (5), et
- une fente s'étendant circonférentiellement (12) fournie dans le barillet d'objectif (5) entre l'ouverture d'objectif (6) et la bride d'objectif (13),
dans lequel l'ensemble d'objectif (3) comprend :
- un élément élastique s'étendant au moins partiellement circonférentiellement (10) qui entoure au moins partiellement le barillet d'objectif (5) et conçu pour être pris en sandwich entre la première partie de bord (8) et la bride d'objectif (13), et
- un élément de clip élastique s'étendant partiellement circonférentiellement (11) qui est conçu pour être reçu dans la fente (12) et jouxter la seconde partie de bord (9).

2. Dispositif de caméra (1) selon la revendication 1, dans lequel le trou d'interconnexion (7) est adapté pour recevoir le barillet d'objectif (5) par insertion d'au moins une partie du barillet d'objectif (5) dans le trou d'interconnexion (7) par l'intermédiaire de la première partie de bord (8) vers la seconde partie de bord (9) le long d'un premier axe longitudinal (L1) de telle sorte que l'ouverture d'objectif (6) dépasse la seconde partie de bord (9) et soit exposée du côté extérieur (32) du boîtier de caméra (2).

3. Dispositif de caméra (1) selon l'une quelconque des revendications 1 ou 2, dans lequel l'élément élastique (10) est un élément s'étendant circonférentiellement qui est compressible dans une direction parallèle au premier axe longitudinal (L1) de telle sorte que l'élément élastique (10) s'efforce de séparer la première partie de bord (8) et la bride d'objectif (13).

4. Dispositif de caméra (1) selon l'une quelconque des revendications précédentes, dans lequel l'élément élastique (10) est conçu pour sceller le trou d'interconnexion (7).

5. Dispositif de caméra (1) selon l'une quelconque des revendications précédentes, dans lequel l'élément élastique (10) comprend au moins un des éléments suivants :
- un joint torique ;
- un j oint circulaire ;
- une rondelle ondulée ;
- un fil de ressort ondulé ;
- une rondelle multiwave ;
- une rondelle de disque ;
- une rondelle incurvée ; et
- une rondelle élastique à doigts.

6. Dispositif de caméra (1) selon l'une quelconque des revendications précédentes, dans lequel l'élément élastique (10) comprend une rondelle métallique et un joint d'étanchéité.

7. Dispositif de caméra (1) selon l'une quelconque des revendications précédentes, dans lequel l'élément de clip (11) entoure partiellement une ouverture de réception extensible (33) qui, dans un état élargi, permet le vissage de l'élément de clip (11) sur le barillet d'objectif (5) et, dans un état moins élargi, permet l'insertion de l'élément de clip (11) dans la fente (12).

8. Dispositif de caméra (1) selon la revendication 7, dans lequel l'élément de clip (11) comprend une première extrémité (34) et une seconde extrémité (35), dans lequel les extrémités (34, 35) sont séparées par un espace (36) où l'espace (36) est augmenté lorsque l'ouverture de réception (33) est élargie.

9. Dispositif de caméra (1) selon l'une quelconque des revendications précédentes, dans lequel le barillet d'objectif (5) comprend une première partie (40) qui a un diamètre s'élargissant de l'ouverture d'objectif (6) vers la fente (12).

10. Dispositif de caméra (1) selon l'une quelconque des revendications précédentes, dans lequel le barillet d'objectif (5) comprend une seconde partie (41) qui a un diamètre constant entre la fente (12) et la bride d'objectif (13).

11. Dispositif de caméra (1) selon l'une quelconque des revendications précédentes, dans lequel le trou d'interconnexion (7) est constitué d'une partie au moins partiellement cylindrique, ayant une paroi interne cylindrique (39) conçue pour recevoir et supporter le barillet d'objectif (5) entre la fente (12) et l'élément élastique (10).

12. Dispositif de caméra (1) selon l'une quelconque des revendications précédentes, dans lequel l'ensemble d'objectif (3) comprend une carte de circuit imprimé (4) PCB, avec un capteur d'image (14).

13. Procédé de fabrication d'un dispositif de caméra (1) le procédé comprenant
la fourniture (S 100) d'un boîtier de caméra (2) dans lequel le boîtier de caméra (2) comprend :
un trou d'interconnexion (7) connectant un côté intérieur (31) du boîtier de caméra (2) à un côté extérieur (32) du boîtier de caméra (2) ;
la fourniture (S200) d'un ensemble d'objectif (3) avec une carte de circuit imprimé (4) PCB, et un barillet d'objectif (5) présentant une ouverture d'objectif (6) et une bride d'objectif ;
le montage (S300) d'un élément élastique s'étendant au moins partiellement circonférentiellement (10) sur le barillet d'objectif (5) de manière à entourer au moins partiellement le barillet d'objectif (5) ;
l'insertion (S400) du barillet d'objectif (5) dans une ouverture de montage (7) dans le boîtier de caméra (2) par l'intermédiaire d'une première partie de bord (8) qui entoure au moins partiellement une première extrémité du trou d'interconnexion (7) sur une face intérieure (31) du boîtier de caméra (2) vers une seconde partie de bord (9) qui entoure au moins partiellement une seconde extrémité du trou d'interconnexion (7) sur un côté extérieur (32) du boîtier de caméra (2) le long d'un premier axe longitudinal (L1) de telle sorte que l'ouverture d'objectif (6) dépasse la seconde partie de bord (9) et soit exposée sur le côté extérieur (32) du boîtier de caméra (2), de telle sorte qu'un élément élastique (10) soit pris en sandwich entre la première partie de bord (8) et la bride d'objectif (13) ; et
le montage (S500) d'un élément de clip élastique s'étendant partiellement circonférentiellement (11) jusqu'à une première fente s'étendant circonférentiellement (12) fournie dans le barillet d'objectif (5) entre l'ouverture d'objectif (6) et la bride d l'objectif (13) de telle sorte que l'élément de clip (11) jouxte la seconde partie de bord (9).

14. Procédé selon la revendication 13, dans lequel dans l'élément élastique (10) est un élément s'étendant circonférentiellement qui est compressible dans une direction parallèle au premier axe longitudinal (L1) et qui s'efforce de séparer la première partie de bord (8) et la bride d'objectif (13).

15. Procédé selon l'une quelconque des revendications 13 ou 14, dans lequel la fourniture (S200) d'un ensemble d'objectif (3) comprend :
le montage (S210) d'un capteur d'image (14) sur la PCB (4)
l'application (S220) d'un adhésif (15) dans une fente de réception (16) dans la PCB (4) ; et
le montage (S230) du barillet d'objectif (5) sur la PCB de telle sorte que l'adhésif (15) lie le barillet d'objectif (5) à la PCB (4).
